(19) **Europäisches Patentamt**
**European Patent Office**
**Office européen des brevets**

(11) **EP 4 221 885 B1**

(12) **EUROPEAN PATENT SPECIFICATION**

(45) Date of publication and mention
of the grant of the patent:
**26.06.2024   Bulletin 2024/26**

(21) Application number: **20792928.2**

(22) Date of filing: **02.10.2020**

(51) International Patent Classification (IPC):
**B01J 19/10** $^{(2006.01)}$    **E21B 28/00** $^{(2006.01)}$

(52) Cooperative Patent Classification (CPC):
**B01J 19/10; E21B 43/003;** B01J 2219/185;
B01J 2219/1943; B01J 2219/1946

(86) International application number:
**PCT/EP2020/077669**

(87) International publication number:
**WO 2022/069060 (07.04.2022 Gazette 2022/14)**

(54) **ACOUSTIC TRANSMITTER WITH ACTIVE WAVEGUIDES FOR OIL WELL TREATMENT**

AKUSTISCHER SENDER MIT AKTIVEN WELLENLEITERN ZUR ÖLBOHRLOCHBEHANDLUNG

ÉMETTEUR ACOUSTIQUE AVEC GUIDES D'ONDES ACTIFS POUR LE TRAITEMENT DE PUITS
DE PÉTROLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.08.2023   Bulletin 2023/32**

(73) Proprietors:
• **Kulbuzhev, Bashir Sultanovich
Moscovski Moscow Region 108811 (RU)**
• **Kulbuzhev, Timur Sultanovich
500085 Brasov (RO)**

(72) Inventors:
• **Kulbuzhev, Bashir Sultanovich
Moscovski Moscow Region 108811 (RU)**
• **Kulbuzhev, Timur Sultanovich
500085 Brasov (RO)**

(74) Representative: **Lohmanns Lohmanns & Partner
mbB
Benrather Schlossallee 49-53
40597 Düsseldorf (DE)**

(56) References cited:
**RU-C1- 2 674 165       RU-C1- 2 717 845
US-A1- 2019 226 302    US-B2- 7 063 144**

## Description

The invention relates to the oil and gas industry and is designed for acoustic treatment of oil and gas wells in order to increase their productivity, in particular for acoustic treatment of the payout beds of oil and gas wells.

At present, there are several well-known designs of transmitters that provide such treatment. According to the principle of a sound field in the frequency range of 20-30 kHz, there are transmitters the main operating element of which is a piezoceramic or magnetostrictive transducer. Selection of such a frequency range according to [Mikhailov N.N. Information and technology geodynamics of the borehole environment. Moscow: Nedra, 1996, 330 pp.] is due to the fact that the decrease in the borehole environment permeability occurs within the near-wellbore bed with a thickness of approximately 1 meter. It is this bed that determines the well productive capacity being its hydrodynamic run-off. Therefore, treatment of the facility with a specific size of about 1 meter requires the equipment with a frequency range of 15-25 kHz, and this is the predominant frequency of the currently used magnetostrictive and piezoceramic transmitters.

There is a well-known device for treatment of the bottom-hole area of oil and gas wells described in patent RU 2196217, containing a support housing, consisting of an open part that can be in contact with the downhole conditions through the openings made in the open part of the support housing and a sealed part, partially filled with an insulating liquid and having an air chamber under atmospheric pressure. The bar magnetostrictive transducer is located in the support housing, and its upper part interacts with the air chamber. An acoustic waveguide is additionally located in the support housing, and its upper end is connected to the magnetostrictive transducer by soldering. Its middle part that coincides with the vibration zero point, is rigidly and tightly connected to the support housing by the welded seam, dividing it into the open and sealed parts, while the lower end surface of the acoustic waveguide is located in the open part of the support housing.

The disadvantage of this device is that it radiates energy in the axial direction from the end of the waveguide that has a small area. It determines the low acoustic power of the device, and the rigid and tight connection of the acoustic waveguide with the support housing by the welded seam makes the structure almost irreparable in the case of failure of the magnetostrictive transducer windings.

Patent RU 2026970 describes a device for acoustic treatment of the oil well payout beds that consists of a generator, an acoustic transmitter made in the form of two rod magnetostrictive vibrators rigidly connected to each other and a sensor. The well-logging instrument is divided in three sections. The collar locator sensor and a signal converter are additionally introduced into this device. Moreover, the acoustic transmitter and pressure compensator in the form of the bellows are located in the lower section filled with the dielectric oil and vacuum processed. The middle section, where the generator is installed, is filled with the dielectric oil no more than 3/4 of its volume under atmospheric pressure. The collar locator, transducer and measuring system sensor are located in the upper section, while the device is powered from the ground power supply unit.

The disadvantage and weak point of this device is that radiation from the transducer end surfaces that have a small area, is sent in the axial direction, as a result of which the device has a small radius of stimulation for the bottom-hole zone. Availability of electronic devices in the transmitter design, namely, a generator and a signal converter, imposes certain restrictions on the operating conditions of the device in terms of temperature. In addition, the use of the bellows for pressure compensation detracts from the device reliability due to the strong influences of a sound field on the bellows that can damage the bellows fastening and make it ineffective.

From RU 2 717 845 C1 an acoustic transmitter is known, comprising two magnetorestrictive transducers electrically connected in series. Further prior art is recognized in RU 2 674 165 C1, US 2019/226302 A1 and US 7,063,144.

The object of the proposed invention is to increase the radius of effective stimulation for the bottom-hole zone of oil and gas wells.

According to the invention, this object is achieved by an acoustic transmitter, comprising a housing with a sealed evacuated chamber filled with an electrically insulating liquid and a lower open chamber being in communication with the outside of the housing through openings in the lower open chamber. A serial arrangement of at least the following elements is positioned in the sealed evacuated chamber:

- at least two magnetostrictive transducers electrically connected in series;
- at least one acoustic waveguide connecting two magnetostrictive transducers;
- a concentrator connected to a first magnetostrictive transducer of the at least two magnetostrictive transducers; and
- at least one emitting waveguide connected to the concentrator.

Preferably, the at least two magnetostrictive transducers are bar magnetostrictive transducers with rods and electrical windings on these rods, wherein the windings are electrically connected in series. The housing is made of a titanium alloy, for example. Preferably, the magnetostrictive transducers have a frequency in the range of 15-30 kHz so that they are ultrasonic transducers. In one embodiment of the invention, the transducers are made of the Permendur alloy.

A dielectrical oil can be used as an electrically insulating liquid. The dielectrical oil degassing due to the evacuation of the lower section internal volume increases reliability and ensures efficient transmitter operation when filling the well with any fluid. In this case, the oil pressure inside the sealed chamber becomes equal to the well pressure.

The technical result is achieved by the fact that the acoustic transmitter contains a support housing, comprising a sealed evacuated chamber and a lower open part being in contact with the borehole fluid by means of openings made in the open part of the support housing. Preferably, the open part of the support housing contains a cylinder-piston arrangement designed for compensation of the external borehole pressure in the sealed evacuated chamber filled with an electrically insulating liquid. A transmitter oscillatory system is installed in the sealed evacuated chamber and contains several magnetostrictive transducers with electric windings and acoustic waveguides made in the form of a cylinder and emitting waveguides in the form of an inverted cone, for example. The proposed acoustic transmitter design does not allow direct contact of the magnetostrictive transducers located in the sealed chamber with the aggressive downhole conditions. In turn, it increases the product's operational life exponentially.

In addition, a concentrator is used to increase the value of the amplitude of oscillations that the oscillatory system produces in the sealed evacuated chamber. Preferably, the concentrator is a stepwise concentrator. For example, the concentrator may have a gain of 2-5, in a preferred case a gain of 3. Typical amplitudes of oscillations produced by a transducer made from Permendur are in the range of 5 to 5.5 $\mu$m. Thus, with a concentrator whose gain is 3, the output oscillations of the concentrator will have an amplitude of about 15 $\mu$m.

The technical result is an increase in the transmitter acoustic power by obtaining a high vibration amplitude of the radiating elements, enhancement of the radiation efficiency, and improvement of the device reliability. Thus, an ultrasonic wave with the required intensity penetrates into the bottom-hole zone, where it leads to cavitation being the operating element for treatment of medium that prevents the oil flow. Thus, due to the use of the required number of bar magnetostrictive transducers providing the required power, as well as the specially selected oscillatory system elements providing the required radiation geometry, the disclosed acoustic transmitter is able to generate an ultrasonic wave with the required intensity.

In one embodiment of the invention, the at least one acoustic waveguide is rigidly connecting two magnetostrictive transducers and/or a concentrator is rigidly connected to a first magnetostrictive transducer. In particular, these elements can rigidly be connected by means of soldering. The use of soldering for the connection of the magnetostrictive transducers to the acoustic waveguides provides good acoustic contact and the required mechanical strength. The at least one emitting waveguide can be connected to the concentrator by means of a longitudinal (axial) threaded pin or stud, for example.

In one embodiment of the invention, the acoustic emitter comprises a serial arrangement of three magnetostrictive transducers and two acoustic waveguides that each connect two of the magnetostrictive transducers, wherein a first magnetostrictive transducer at one (lower) end of the serial arrangement is connected to the concentrator. Preferably, a second magnetostrictive transducer at an opposite (upper) second end of the serial arrangement is connected to a geophysical head. Thus, the concentrator and the at least one emitting waveguide are located at the lower part of the sealed evacuated chamber.

Preferably, the at least one acoustic waveguide connecting two magnetostrictive transducers is of a cylinder-type. On the other hand, the at least one emitting waveguide connected to the concentrator is designed to change the geometry of the acoustic waves emitted by the magnetostrictive transducers. This can be achieved by different designs of the emitting waveguide/s. In one embodiment of the invention, at least one emitting waveguide is of the inverted-cone type with a conical part, whereby the diameter of said conical part preferably decreases in the direction of the concentrator.

Preferably, two emitting waveguides are used that are connected in series. Both emitting waveguides can be of the inverted-cone type. In another embodiment of the invention, both emitting waveguides basically are of the inverted-cone type with a conical part, but at least one of the emitting waveguides has a basically conical part with two opposite flattened side walls extending in the direction of the longitudinal axis of the emitting waveguide, in particular two parallel flat side walls. In this design, the acoustic emitting waveguides, having an inverted cone structure, change the scattering geometry from the axial direction to the radial one. The performed studies of the device radiation pattern have confirmed that the amplitude reaches its maximum values in the area of a second emitting waveguide at the lower end of the assembly.

As mentioned before, in one embodiment of the invention, the lower open chamber comprises a pressure compensator. This pressure compensator can comprise a cylinder-piston arrangement designed for compensation of the external borehole pressure in the sealed evacuated chamber filled with the electrically insulating liquid.

The described design solution allows to obtain a high oscillation amplitude of the radiating elements that enhances the acoustic power of the acoustic downhole transmitter and thereby increases the radius of its effective stimulation of the bottom-hole zone. This is very important at the high borehole pressures, since it is known that with increase in pressure in the borehole and the transmitter immersion, it is necessary to improve the ultrasonic wave intensity to approach the cavitation threshold value.

The design of the well-logging acoustic emitter according to the invention increases its maintainability, reliability and ensures efficient operation of the device in a wide range of temperatures and pressures.

The invention will be explained in greater detail below based on the attached figures. These must be viewed only as examples, and are not intended to limit the invention to the depicted embodiments.

Figure 1    shows an embodiment of the design of an ultrasonic transducer oscillatory system used in an acoustic transmitter;

Figure 2    shows a longitudinal section through an acoustic transmitter;

Figure 3    shows a three-dimensional view of an embodiment of two emitting waveguides; and

Figure 4    shows the vibration amplitude curves (A) and mechanical stresses ($\sigma$) of a concentrator used in an acoustic transmitter.

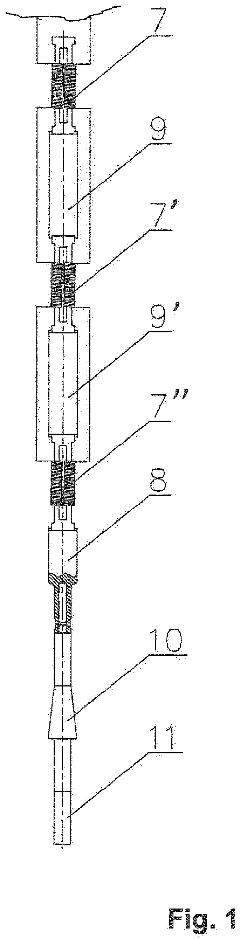

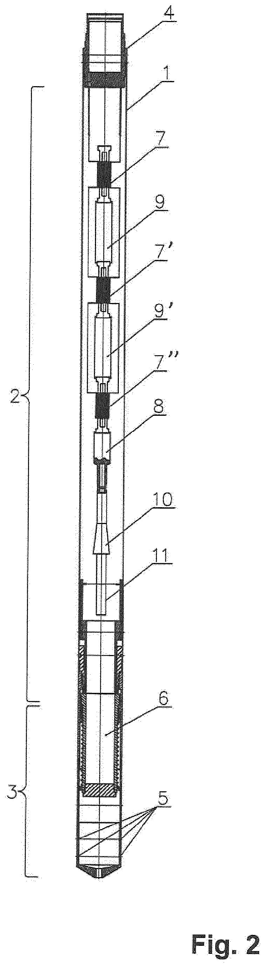

The basic components of one embodiment of the acoustic transmitter according to the invention and its oscillatory system are explained based on Figures 1 and 2. The acoustic transmitter according to the invention comprises a housing 1 with a sealed evacuated chamber 2 filled with an electrically insulating liquid. This chamber 2 contains several elements of an ultrasonic transducer oscillatory system which is shown in Figure 1. This ultrasonic transducer oscillatory system is a serial arrangement of several elements which are described later. The housing 1 also comprises a chamber 3 in the lower part of the housing which can be called lower part chamber. This chamber 3 interconnects with the downhole conditions in a well by means of openings 5 in the lower part chamber 3.

The ultrasonic transducer oscillatory system comprises several bar magnetostrictive transducers 7, 7' and 7" and the electric power supply of these bar magnetostrictive transducers 7, 7', 7" is performed using a geophysical head 4.

Figure 1 shows the oscillatory system without the housing, whereby it comprises at least two magnetostrictive transducers. In this embodiment, three magnetostrictive transducers 7, 7', 7" are used and connected in series. For example, bar magnetostrictive transducers are used with electric winding on their rods. The oscillatory system also comprises a concentrator 8 and acoustic waveguides 9, 9' made in the form of a cylinder. It also comprises at least one acoustic emitting waveguide in form of an inverted cone. In this embodiment, two emitting waveguides 10 and 11 of the inverted-cone type are used and connected in series.

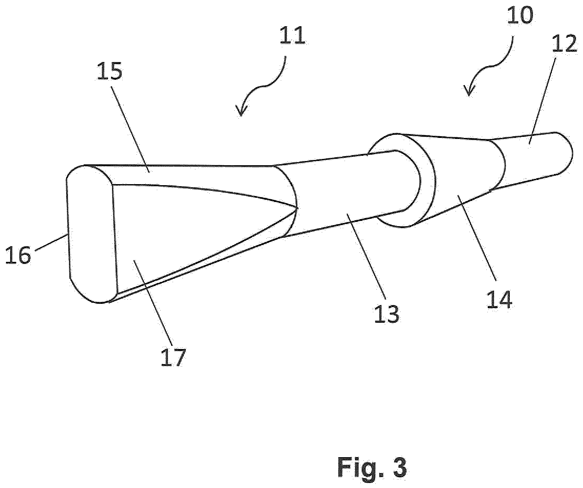

Figure 3 shows a three-dimensional view of two emitting waveguides 10 and 11 of the inverted-cone type. Thereby, waveguide 10 is connected to the concentrator 8 and comprises a cylindrical part 12 and a conical part 14. The same applies to the second emitting waveguide 11 with a cylindrical part 13 and a basically conical part 15. The diameters of the conical parts 14 and 15 decrease in the direction of their cylindrical parts 12 and 13, which means in direction of the concentrator as can be derived from Figures 1 and 2. Thereby, only one conical part 14 of the upper waveguide 10 can be seen in Figures 1 and 2 because of the perspective. The basically conical part 15 of the lower waveguide 11 has two opposite flattened side walls 16 und 17 extending in the direction of the longitudinal axis of the emitting waveguide 11, in particular two parallel flat side walls. These flat walls 16, 17 are cut into the conical part 15 and this design is advantageous because on one side it provides a rigid connection of the vibrating end of the waveguide 11 with the internal elements of the radiator and the other side maintains the resonant frequency of the waveguide 11 when connecting it to the load. In this embodiment, the distance between these two side walls 16, 17 is equal to the diameter of the cylindrical part 13 so that in the views of Figures 1 and 2, the conical part 15 cannot be seen.

The assembly of the oscillatory system elements is a rigid in-series connection of the given elements in the following order: the three bar magnetostrictive transducers 7, 7', 7" are connected in series with the two cylindrical acoustic waveguides 9, 9' by soldering, for example. The bar magnetostrictive transducer 7"at the lower end of this serial arrangement is soldered to a concentrator 8 that is then connected to two emitting waveguides 10 and 11 by a threaded stud, for example (not shown in the Figures).

The section design with the oscillatory system elements evacuated and completely filled with an insulating liquid ensures reliable operation of the transmitter regardless of specifications of the fluid filling the well, since in the absence of the design protection of the transmitter elements, such fluid parameters as its corrosive activity, high temperature and pressure, etc., significantly affect the transmitter operating parameters and durability, while its distortion reduces the device efficiency.

Electrical engineering calculations have showed that a certain transmitter design power requires using three bar magnetostrictive transducers with certain dimensions that can be been implemented in this design.

With the pressure increase in the well and immersion of the ultrasonic transducer, the threshold value for the ultrasonic cavitation is increased, therefore it is very important to enhance the ultrasonic wave intensity that, as it is known, depends on the oscillation amplitude generated by the device and is described by the following formula:

$$I = (\rho * c * \omega 2)/2 * A^2,$$

where $\rho$ is the medium density; c is the speed of ultrasonic wave propagation in the medium; $\omega$ is the circular frequency; A is the oscillation amplitude.

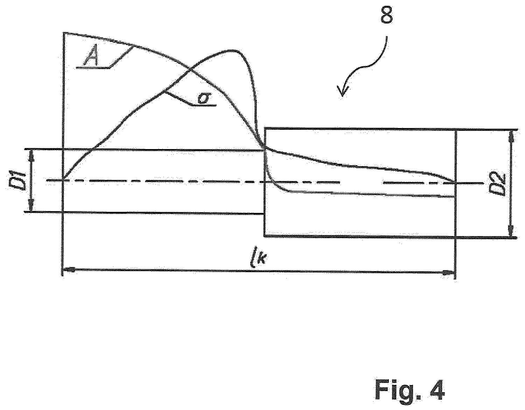

It can be seen based on this dependence that the ultrasonic wave intensity is related to the oscillation amplitude by a quadratic relation. In order to increase the oscillation amplitude of finite elements, the typical stepwise concentrator 8 has been introduced into the oscillatory circuit. Its curves of oscillation amplitudes A and mechanical stresses σ are presented in Figure 4. According to this Figure, it can be seen that at the end of the concentrator 8 with a diameter D1, the oscillation amplitude A is increased exponentially compared with the input part of the diameter D2, and the stresses σ are reduced to zero.

Two acoustic emitting waveguides 10 and 11 of the inverted-cone type are preferably used in the oscillatory system. They are designed to change the geometry of the emitted acoustic waves, namely to increase the R-component of radiation. Thus, due to the use of the required number of bar magnetostrictive transducers providing the required power, as well as the specially selected oscillatory system elements providing the required radiation geometry, the disclosed acoustic transmitter is able to generate an ultrasonic wave with the required intensity. It penetrates into the bottom-hole zone and creates cavitation being an operating element for treatment of the medium that prevents the oil flow.

The transmitter efficiency when the pressure and ambient temperature are changing is ensured by a pressure compensator 6, made in the form of a piston. Its movements allow to maintain the pressure of the near-wellbore space within the transmitter.

The device is operated as follows:
The device (acoustic transmitter) is connected through the geophysical head 4 with a carrying cable (not shown in the Figures) to a ground generator. It is lowered to the payout bed perforation zone in a well-bore. An alternating voltage with the operating frequency relevant to the resonance frequency of the magnetostrictive transducers 7, 7', 7" is supplied through the cable from the generator located on the ground. A bias current is simultaneously supplied from this ground generator to the same electric windings of the magnetostrictive transducers 7, 7', 7". The bar magnetostrictive transducers 7, 7', 7" through the acoustic waveguides 9, 9' and the concentrator 8 transmit the acoustic wave energy to the emitting waveguides 10 and 11, causing them to oscillate, where the elastic energy is completely transferred to the transmitter housing 1 and further into the environment of the housing 1.

In this design, the acoustic emitting waveguides 10 and 11, having an inverted-cone structure, change the scattering geometry from the axial direction to the radial one. The performed studies of the device radiation pattern have confirmed that the amplitude reaches its maximum values in the area of the second emitting waveguide 11 at the lower end of the assembly.

Pressure inside the sealed evacuated chamber 2 is equalized with the borehole pressure through the openings 5 in the open chamber 3 by using the piston-type pressure compensator 6, compressed by a spring.

LIST OF REFERENCE NUMERALS

| 1 | Housing |
|---|---|
| 2 | Sealed chamber |
| 3 | Lower part chamber |
| 4 | Geophysical head |
| 5 | Opening |
| 6 | Pressure compensator |
| 7,7',7" | Transducer |
| 8 | Concentrator |
| 9,9' | Acoustic waveguide |
| 10,11 | Emitting waveguide |
| 12,13 | Cylindrical part |
| 14,15 | Conical part |
| 16,17 | Side wall |
| 20 | Opening |

**Claims**

1. Acoustic transmitter, comprising a housing (1) with a sealed evacuated chamber (2) filled with an electrically insulating liquid and a lower open chamber (3) being in communication with the outside of the housing (1) through openings (5) in the lower open chamber (3), wherein the following serial arrangement of elements is positioned in the sealed evacuated chamber (2):

   - at least two magnetostrictive transducers (7;7';7") electrically connected in series;
   - at least one acoustic waveguide (9;9') connecting two magnetostrictive transducers (7;7';7");
   - a concentrator (8) connected to a first magnetostrictive transducer (7") of the at least two magnetostrictive transducers (7;7';7"); and
   - at least one emitting waveguide (10;11) connected to the concentrator (8).

2. Acoustic transmitter according to claim 1, wherein the at least one acoustic waveguide (9;9') is rigidly connecting two magnetostrictive transducers (7;7';7") and/or a concentrator (8) is rigidly connected to a first magnetostrictive transducer (7").

3. Acoustic transmitter according to claim 1, wherein the at least one acoustic waveguide (9;9') is rigidly connecting two magnetostrictive transducers (7;7';7") by means of soldering and/or the concentrator (8) is rigidly connected to the first magnetostrictive transducer (7") by means of soldering.

4. Acoustic transmitter according to one of claims 1 to 3, wherein the at least one emitting waveguide (10;11) is connected to the concentrator (8) by means of a threaded pin.

5. Acoustic transmitter according to one of claims 1 to 4, comprising a serial arrangement of three magnetostrictive transducers (7;7';7") and two acoustic waveguides (9;9') that each connect two of the magnetostrictive transducers (7;7';7"), wherein a first magnetostrictive transducer (7") at one end of the serial arrangement is connected to the concentrator (8) and a second magnetostrictive transducers (7) at an opposite second end of the serial arrangement is connected to a geophysical head (4).

6. Acoustic transmitter according to one of claims 1 to 5, wherein the at least two magnetostrictive transducers are bar magnetostrictive transducers (7;7';7") with rods and electrical windings on these rods, wherein the windings are electrically connected in series.

7. Acoustic transmitter according to one of claims 1 or 6, wherein the at least one acoustic waveguide (9;9') connecting two magnetostrictive transducers (7;7';7") is of a cylinder-type.

8. Acoustic transmitter according to one of claims 1 to 7, wherein the at least one emitting waveguide (10;11) connected to the concentrator (8) is designed to change the geometry of the acoustic waves emitted by the magnetostrictive transducers (7;7';7"),

9. Acoustic transmitter according to claim 8, wherein the at least one emitting waveguide (10;11) is of the inverted-cone type with a conical part (14;15), whereby the diameter of said conical part (14;15) decreases in the direction of the concentrator (8).

10. Acoustic transmitter according to claim 9, wherein at least one of the emitting waveguides (11) has a basically conical part (15) with two opposite flattened side walls (16;17) extending in the direction of the longitudinal axis of the emitting waveguide (11), in particular two parallel flat side walls (16;17).

11. Acoustic transmitter according to one of claims 1 to 10, wherein the lower open chamber (3) comprises a pressure compensator (6).

12. Acoustic transmitter according to one of claims 1 to 11, wherein the concentrator (8) is a stepwise concentrator.

13. Acoustic transmitter according to one of claims 1 to 12, wherein the concentrator (8) has a gain of 2-5, preferably a gain of 3.

**Patentansprüche**

1. Akustischer Sender, umfassend ein Gehäuse (1) mit einer abgedichteten evakuierten Kammer (2), die mit einer elektrisch isolierenden Flüssigkeit gefüllt ist, und einer unteren offenen Kammer (3) in Verbindung mit der Außenseite des Gehäuses (1) durch Öffnungen (5) in der unteren offenen Kammer (3), wobei sich die folgende Reihenanordnung von Elementen in der abgedichteten evakuierten Kammer (2) befindet:

   - mindestens zwei magnetostriktive Wandler (7; 7'; 7"), die elektrisch in Reihe geschaltet sind;
   - mindestens ein akustischer Wellenleiter (9; 9'), der zwei magnetostriktive Wandler (7; 7'; 7") verbindet;
   - ein Konzentrator (8), der mit einem ersten magnetostriktiven Wandler (7") der mindestens zwei magnetostriktiven Wandler (7; 7'; 7") verbunden ist; und
   - mindestens ein abstrahlender Wellenleiter (10; 11), der mit dem Konzentrator (8) verbunden ist.

2. Akustischer Sender nach Anspruch 1, wobei der mindestens eine akustische Wellenleiter (9; 9') starr zwei magnetostriktive Wandler (7; 7'; 7") verbindet und/oder ein Konzentrator (8) starr mit einem ersten magnetostriktiven Wandler (7") verbunden ist.

3. Akustischer Sender nach Anspruch 1, wobei der mindestens eine akustische Wellenleiter (9; 9') zwei magnetostriktive Wandler (7; 7'; 7") starr durch Löten verbindet und/oder der Konzentrator (8) mit dem ersten magnetostriktiven Wandler (7") starr durch Löten verbunden ist.

4. Akustischer Sender nach einem der Ansprüche 1 bis 3, wobei der mindestens eine abstrahlende Wellenleiter (10; 11) mittels eines Gewindestiftes mit dem Konzentrator (8) verbunden ist.

5. Akustischer Sender nach einem der Ansprüche 1 bis 4, umfassend eine Reihenanordnung aus drei magnetostriktiven Wandlern (7; 7'; 7") und zwei akustischen Wellenleitern (9; 9'), die jeweils zwei der magnetostriktiven Wandler (7; 7'; 7") verbinden, wobei ein erster magnetostriktiver Wandler (7") an einem Ende der Reihenanordnung mit dem Konzentrator (8) verbunden ist und ein zweiter magnetostriktiver Wandler (7) an einem gegenüberliegenden zweiten Ende der Reihenanordnung mit einem geophysikalischen Kopf (4) verbunden ist.

6. Akustischer Sender nach einem der Ansprüche 1 bis 5, wobei die mindestens zwei magnetostriktiven Wandler stabförmige magnetostriktive Wandler (7; 7'; 7") mit Stäben und elektrischen Wicklungen an diesen Stäben sind, wobei die Wicklungen elektrisch in Reihe geschaltet sind.

**7.** Akustischer Sender nach einem der Ansprüche 1 oder 6, wobei der mindestens eine akustische Wellenleiter (9; 9'), der zwei magnetostriktive Wandler (7; 7'; 7") verbindet, ein Zylindertyp ist.

**8.** Akustischer Sender nach einem der Ansprüche 1 bis 7, wobei der mindestens eine abstrahlende Wellenleiter (10; 11), der mit dem Konzentrator (8) verbunden ist, dazu ausgelegt ist, die Geometrie der durch die magnetostriktiven Wandler (7; 7'; 7") abgestrahlten akustischen Wellen zu ändern.

**9.** Akustischer Sender nach Anspruch 8, wobei der mindestens eine abstrahlende Wellenleiter (10; 11) vom Typ eines umgekehrten Kegels mit einem konischen Teil (14; 15) ist, wobei sich der Durchmesser des konischen Teils (14; 15) in Richtung des Konzentrators (8) verringert.

**10.** Akustischer Sender nach Anspruch 9, wobei mindestens einer der abstrahlenden Wellenleiter (11) einen im Wesentlichen konischen Teil (15) mit zwei gegenüberliegenden, sich in Richtung der Längsachse des abstrahlenden Wellenleiters (11) erstreckenden ebenen Seitenwänden (16; 17), insbesondere zwei parallelen ebenen Seitenwänden (16; 17), aufweist.

**11.** Akustischer Sender nach einem der Ansprüche 1 bis 10, wobei die untere offene Kammer (3) einen Druckausgleicher (6) umfasst.

**12.** Akustischer Sender nach einem der Ansprüche 1 bis 11, wobei der Konzentrator (8) ein Stufenkonzentrator ist.

**13.** Akustischer Sender nach einem der Ansprüche 1 bis 12, wobei der Konzentrator (8) eine Verstärkung von 2-5, vorzugsweise eine Verstärkung von 3, aufweist.

## Revendications

**1.** Émetteur acoustique, comprenant un boîtier (1) pourvu d'une chambre sous vide scellée (2) remplie d'un liquide électro-isolant et d'une chambre ouverte inférieure (3) en communication avec l'extérieur du boîtier (1) par des ouvertures (5) dans la chambre ouverte inférieure (3), l'agencement en série suivant d'éléments étant positionné dans la chambre sous vide scellée (2) :

   - au moins deux transducteurs magnétostrictifs (7 ; 7' ; 7") connectés électriquement en série ;
   - au moins un guide d'ondes acoustiques (9 ; 9') reliant deux transducteurs magnétostrictifs (7 ; 7' ; 7") ;
   - un concentrateur (8) relié à un premier transducteur magnétostrictif (7") des au moins deux transducteurs magnétostrictifs (7 ; 7' ; 7") ; et
   - au moins un guide d'ondes d'émission (10 ; 11) relié au concentrateur (8).

**2.** Émetteur acoustique selon la revendication 1, dans lequel l'au moins un guide d'ondes acoustiques (9 ; 9') relie de manière inamovible deux transducteurs magnétostrictifs (7 ; 7' ; 7") et/ou dans lequel un concentrateur (8) est relié de manière inamovible à un premier transducteur magnétostrictif (7").

**3.** Émetteur acoustique selon la revendication 1, dans lequel l'au moins un guide d'ondes acoustiques (9 ; 9') relie de manière inamovible deux transducteurs magnétostrictifs (7 ; 7' ; 7") par soudure et/ou dans lequel le concentrateur (8) est relié de manière inamovible au premier transducteur magnétostrictif (7") par soudure.

**4.** Émetteur acoustique selon l'une des revendications 1 à 3, dans lequel l'au moins un guide d'ondes d'émission (10 ; 11) est relié au concentrateur (8) au moyen d'une goupille filetée.

**5.** Émetteur acoustique selon l'une des revendications 1 à 4, comprenant un agencement en série de trois transducteurs magnétostrictifs (7 ; 7' ; 7") et deux guides d'ondes acoustiques (9 ; 9') qui relient chacun deux des transducteurs magnétostrictifs (7 ; 7' ; 7"), un premier transducteur magnétostrictif (7") à une extrémité de l'agencement en série étant relié au concentrateur (8) et un second transducteur magnétostrictif (7) à une seconde extrémité opposée de l'agencement en série étant relié à une tête géophysique (4).

**6.** Émetteur acoustique selon l'une des revendications 1 à 5, dans lequel les au moins deux transducteurs magnétostrictifs sont des transducteurs magnétostrictifs à barreaux (7 ; 7' ; 7") comportant des tiges et des enroulements électriques sur ces tiges, les enroulements étant connectés électriquement en série.

**7.** Émetteur acoustique selon l'une des revendications 1 à 6, dans lequel l'au moins un guide d'ondes acoustiques (9 ; 9') reliant deux transducteurs magnétostrictifs (7 ; 7' ; 7") est de type cylindrique.

**8.** Émetteur acoustique selon l'une des revendications 1 à 7, dans lequel l'au moins un guide d'ondes d'émission (10 ; 11) relié au concentrateur (8) est conçu pour modifier la géométrie des ondes acoustiques émises par les transducteurs magnétostrictifs (7 ; 7' ; 7").

9. Émetteur acoustique selon la revendication 8, dans lequel l'au moins un guide d'ondes d'émission (10 ; 11) est de type cône inversé avec une partie conique (14 ; 15), le diamètre de ladite partie conique (14 ; 15) diminuant dans la direction du concentrateur (8).

10. Émetteur acoustique selon la revendication 9, dans lequel au moins un des guides d'ondes d'émission (11) présente une partie fondamentalement conique (15) avec deux parois latérales opposées aplaties (16 ; 17) s'étendant dans la direction de l'axe longitudinal du guide d'ondes d'émission (11), en particulier deux parois latérales plates parallèles (16 ; 17).

11. Émetteur acoustique selon l'une des revendications 1 à 10, dans lequel la chambre ouverte inférieure (3) comprend un compensateur de pression (6).

12. Émetteur acoustique selon l'une des revendications 1 à 11, dans lequel le concentrateur (8) est un concentrateur à paliers.

13. Émetteur acoustique selon l'une des revendications 1 à 12, dans lequel le concentrateur (8) a un gain de 2 à 5, de préférence un gain de 3.

**Fig. 1**

**Fig. 2**

EP 4 221 885 B1

Fig. 3

11

Fig. 4

**EP 4 221 885 B1**

**REFERENCES CITED IN THE DESCRIPTION**

**Patent documents cited in the description**

- RU 2196217
- RU 2026970
- RU 2717845 C1
- RU 2674165 C1
- US 2019226302 A1
- US 7063144 B